(19) Europäisches Patentamt
European Patent Office
Office européen des brevets

(11) **EP 4 059 813 B1**

(12) **EUROPÄISCHE PATENTSCHRIFT**

(45) Veröffentlichungstag und Bekanntmachung des Hinweises auf die Patenterteilung:
**18.10.2023   Patentblatt 2023/42**

(21) Anmeldenummer: **22160013.3**

(22) Anmeldetag: **03.03.2022**

(51) Internationale Patentklassifikation (IPC):
***B62D 6/00*** *(2006.01)*

(52) Gemeinsame Patentklassifikation (CPC):
**B62D 6/002**

(54) **REGELUNGSEINRICHTUNG UND VERFAHREN ZUR LENKWINKELREGELUNG EINES FAHRZEUGS**

CONTROL DEVICE AND METHOD FOR CONTROLLING THE STEERING ANGLE OF A VEHICLE

DISPOSITIF DE RÉGULATION ET PROCÉDÉ DE RÉGULATION DE L'ANGLE DE BRAQUAGE D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.03.2021   DE 102021202482**

(43) Veröffentlichungstag der Anmeldung:
**21.09.2022   Patentblatt 2022/38**

(73) Patentinhaber: **Continental Automotive Technologies GmbH**
**30165 Hannover (DE)**

(72) Erfinder:
• **Keßler, Philipp**
**90411 Nürnberg (DE)**

• **Feick, Stefan**
**90411 Nürnberg (DE)**
• **Simon, Michael**
**90411 Nürnberg (DE)**

(74) Vertreter: **Continental Corporation**
**c/o Continental Automotive GmbH**
**Intellectual Property**
**Nordostpark 30**
**90411 Nürnberg (DE)**

(56) Entgegenhaltungen:
**US-A1- 2019 233 003     US-A1- 2020 010 111**

**Beschreibung**

Die Erfindung betrifft eine Regelungseinrichtung sowie ein Verfahren zur Regelung des Lenkwinkels eines Fahrzeugs.

Elektromechanische Lenkungen für Fahrzeuge (auch EPS: Electric Power Steering) sind grundsätzlich bekannt. Hierbei unterstützt und überlagert ein programmgesteuerter elektrischer Stellmotor die Lenkbewegungen des Fahrers, indem dieser Kräfte auf die Lenkmechanik überträgt.

Zudem ist bekannt, dass elektromechanische Lenkungen Regelungseinrichtungen aufweisen, um beim automatisierten Fahren (im Rahmen von SAE-Level 2 und höher) störende Einflüsse abzumildern bzw. zu unterdrücken. Derartige Regelungseinrichtungen weisen einen integrierenden Regelungsanteil auf, um die sich aufbauenden Querkräfte zu kompensieren.

Bekannte Regelungseinrichtungen haben eine Schnittstelle, über die das Regelverhalten anpassbar ist. Dadurch kann das Regelverhalten an den Fahrzustand bzw. die jeweilige Fahrsituation angepasst werden.

Problematisch ist, dass die beschriebene Einflussnahme auf das Regelverhalten nicht möglich ist, wenn die Regelungseinrichtung keine derartige Schnittstelle aufweist bzw. der Aufbau der Regelungseinrichtung nicht bekannt ist, und damit keine von der Fahrsituation abhängige Anpassung des Regelverhaltens möglich ist. So können beispielsweise aufladende integrierende Anteile in der Lenkwinkelregelung dann weiter zu unerwünschtem Fahrzeugverhalten führen.

Aus der US 2019 233 003 A1 ist eine Lenksteuervorrichtung bekannt, die basierend auf einem Befehlswert einen Motor steuert, der auf einen Lenkmechanismus eines Fahrzeugs wirkt, der in Übereinstimmung mit einem Lenkzustand berechnet wird, wobei die Lenksteuervorrichtung eine Axialkraft-Berechnungsschaltung, die eine Vielzahl von Axialkräften berechnet, die auf eine gelenkte Welle ausgeübt werden sollen, basierend auf einer Vielzahl von Zustandsgrößen und eine Verteilungsberechnungsschaltung aufweist, die eine endgültige Axialkraft berechnet, die in dem Befehlswert widergespiegelt wird, indem Werte summiert werden, die durch Multiplizieren der Vielzahl von Axialkräften mit individuell eingestellten Verteilungsraten erhalten werden und die Verteilungsberechnungsschaltung die Verteilungsraten der Vielzahl von Axialkräften basierend auf einem Verteilungsbefehl einstellt, der von einer Host-Steuervorrichtung erzeugt wird, wenn die Host-Steuervorrichtung in die Lenksteuerung eingreift.

Ausgehend hiervon ist es Aufgabe der Erfindung, eine Regelungseinrichtung anzugeben, die eine Einflussnahme auf das Regelungsverhalten der Lenkwinkelregelung auch dann ermöglicht, wenn keine Schnittstelle zu einer solchen Einflussnahme vorgesehen ist.

Die Aufgabe wird durch die Vorrichtung mit den Merkmalen des unabhängigen Patentanspruchs 1 gelöst. Bevorzugte Ausführungsformen sind Gegenstand der Unteransprüche. Ein Verfahren zur Regelung des Lenkwinkels eines Fahrzeugs ist Gegenstand des nebengeordneten Patentanspruchs 13.

Gemäß einem ersten Aspekt bezieht sich die Erfindung auf eine Regelungseinrichtung zur Regelung des Lenkwinkels eines Fahrzeugs. Die Regelungseinrichtung umfasst eine erste Reglereinheit, deren Regelungsverhalten zumindest einen integrierenden Anteil aufweist. Diese erste Reglereinheit bildet vorzugsweise die Basis-Lenkwinkelregelung, deren Regelverhalten angepasst werden soll. Sie umfasst den Regler, der eine Stellgröße bereitstellt, den Stellmotor, der die Stellgröße empfängt, und die mechanischen Komponenten der Lenkung. Zudem ist ein der ersten Reglereinheit überlagerter Regler vorgesehen. Dieser überlagerte Regler ist dazu ausgebildet, das Regelungsverhalten der unterlagerten ersten Reglereinheit zu verändern. Der überlagerte Regler weist einen Rückführpfad und einen Vorfilter auf, Der Rückführpfad ist dazu ausgebildet, basierend auf Ist-Lenkwinkelinformationen, die von der ersten Reglereinheit als Ausgangsgröße bereitgestellt werden, eine erste Anpassgröße bereitzustellen. Der Vorfilter ist dazu ausgebildet, basierend auf Soll-Lenkwinkelinformationen eine zweite Anpassgröße bereitstellen. Zudem ist der überlagerte Regler dazu konfiguriert, basierend auf der ersten und zweiten Anpassgröße eine Eingangsinformation für die erste Reglereinheit zu bilden. Der Rückführpfad weist dabei ein erstes Korrekturglied auf, dessen Übertragungsverhalten basierend auf zumindest einer Steuergröße anpassbar ist. Der Vorfilter weist ein zweites Korrekturglied auf, dessen Übertragungsverhalten basierend auf zumindest einer Steuergröße anpassbar ist. Der überlagerte Regler ist derart ausgebildet, dass zumindest die Reglerverstärkung der ersten Reglereinheit basierend auf der Steuergröße anpassbar ist. Dabei bedeutet "zumindest die Regelverstärkung anpassbar ist" im Sinne der vorliegenden Offenbarung, dass das Übertragungsverhalten entweder ausschließlich durch Ändern eines Verstärkungsfaktors der ersten Reglereinheit in Form einer rationalen Zahl oder durch Anwenden einer komplexen Filterfunktion geändert wird.

Der technische Vorteil der erfindungsgemäßen Regelungseinrichtung besteht darin, dass durch den überlagerten Regler basierend auf einer Steuergröße eine Anpassung der Reglerverstärkung oder des Übertragungsverhaltens der ersten Reglereinheit erreicht werden kann, obwohl diese selbst keine direkte Möglichkeit zur Einflussnahme zur Anpassung der Reglerverstärkung bzw. des Übertragungsverhaltens bietet. In anderen Worten wird durch Einflussnahme auf die der ersten Reglereinheit zugeführten Eingangsinformationen dasselbe Ergebnis erreicht wie wenn die Reglerverstärkung bzw. das Übertragungsverhalten der ersten Reglereinheit selbst direkt durch die Steuergröße veränderbar ist. Dadurch ist eine Verbesserung des Regelungsverhaltens möglich, insbesondere derart, dass Oszillationen vermieden und störende Einflüsse des integrierenden Regelungsanteils reduziert werden können.

Gemäß einem Ausführungsbeispiel ist das erste Korrekturglied dazu ausgebildet, die Ist-Lenkwinkelinformationen mit einem von der Steuergröße abhängigen Faktor oder einer komplexen Filterfunktion zu multiplizieren. In anderen Worten empfängt damit das erste Korrekturglied die Ausgangsinformationen, die als Ist-Lenkwinkelinformationen von der ersten Reglereinheit bereitgestellt werden und modifiziert diese basierend auf der Steuergröße zu einer ersten Anpassgröße, basierend auf der die Eingangsinformationen, die der ersten Reglereinheit zugeführt werden, modifiziert werden.

Gemäß einem Ausführungsbeispiel ist der Faktor (1-P(s)), wobei P(s) ein vom Steuersignal s abhängiger Korrekturfaktor ist, dessen Wert die Anpassung der Reglerverstärkung der ersten Reglereinheit angibt oder wobei P(s) eine vom Steuersignal abhängige komplexe Filterfunktion ist. Durch die Verwendung dieses Faktors oder einer solchen Funktion ist eine Anpassung der Reglerverstärkung bzw. des Übertragungsverhaltens der ersten Reglereinheit von außen möglich, ohne direkt Einfluss auf die erste Reglereinheit selbst zu nehmen.

Gemäß einem Ausführungsbeispiel ist das zweite Korrekturglied dazu ausgebildet, die Soll-Lenkwinkelinformationen mit einem von der Steuergröße abhängigen Faktor oder einer komplexen Filterfunktion zu multiplizieren. In anderen Worten empfängt damit das zweite Korrekturglied die Lenkwinkelinformationen, die von einer übergeordneten Steuereinheit, beispielsweise einer Steuereinheit eines Fahrassistenzsystems bereitgestellt werden, und modifiziert diese basierend auf der Steuergröße zu einer zweiten Anpassgröße. Die Anpassgröße wiederum beeinflusst die Eingangsinformationen, die der ersten Reglereinheit zugeführt werden.

Gemäß einem Ausführungsbeispiel ist der im zweiten Korrekturglied verwendete Faktor (1-P(s)), wobei P(s) ein vom Steuersignal s abhängiger Korrekturfaktor ist, dessen Wert die Anpassung der Reglerverstärkung der ersten Reglereinheit angibt oder wobei P(s) eine vom Steuersignal abhängige komplexe Filterfunktion ist. Dadurch ist wiederum eine Anpassung der Reglerverstärkung bzw. des Übertragungsverhaltens der ersten Reglereinheit von außen möglich, ohne direkt Einfluss auf die erste Reglereinheit selbst zu nehmen.

Gemäß einem anderen Ausführungsbeispiel ist der im zweiten Korrekturglied verwendete Faktor P(s), wobei P(s) ein vom Steuersignal s abhängiger Korrekturfaktor ist, dessen Wert die Anpassung der Reglerverstärkung der ersten Reglereinheit angibt oder wobei P(s) eine vom Steuersignal abhängige komplexe Filterfunktion ist. Auch durch die Verwendung dieses Faktors ist eine Anpassung der Reglerverstärkung bzw. des Übertragungsverhaltens der ersten Reglereinheit von außen möglich, ohne direkt Einfluss auf die erste Reglereinheit selbst zu nehmen.

Gemäß einem Ausführungsbeispiel ist ein Summationspunkt vorgesehen, an dem zu den Soll-Lenkwinkelinformationen die erste Anpassgröße hinzuaddiert und an dem von den Soll-Lenkwinkelinformationen die zweite Anpassgröße subtrahiert werden, wobei die Ausgangsinformationen des Summationspunkts die Eingangsgröße der ersten Reglereinheit bildet. Durch die damit bewirkte Anpassung der Soll-Lenkwinkelinformationen ist eine indirekte Anpassung der Reglerverstärkung der ersten Reglereinheit von außen möglich.

Gemäß einem anderen Ausführungsbeispiel ist ein Summationspunkt vorgesehen, an dem die erste Anpassgröße und die zweite Anpassgröße addiert werden, wobei die Ausgangsinformationen des Summationspunkts die Eingangsgröße der ersten Reglereinheit bildet. Durch die damit bewirkte Anpassung der Soll-Lenkwinkelinformationen wird eine weitere Alternative zur indirekten Anpassung der Reglerverstärkung der ersten Reglereinheit von außen ermöglicht.

Gemäß einem Ausführungsbeispiel sind das erste und zweite Korrekturglied basierend auf der identischen Steuergröße anpassbar. Dadurch lässt sich eine vereinfachte Regelungseinrichtung erreichen.

Gemäß einem Ausführungsbeispiel ist die erste Reglereinheit eine in sich geschlossene Reglereinheit, die keine externe Schnittstelle aufweist, über die die Reglerverstärkung der ersten Reglereinheit anpassbar ist. In anderen Worten bildet die erste Reglereinheit eine sog. Blackbox, deren Regelverhalten extern nicht angepasst werden kann, so dass eine situationsabhängige Änderung des Regelverhaltens möglich wäre. Der der ersten Reglereinheit als unterlagerte Reglereinheit überlagerte Regler ermöglicht es aber, das Fehlen einer solchen Schnittstelle durch eine äußere Regelschleife zu kompensieren.

Gemäß einem Ausführungsbeispiel ist die Steuergröße zumindest von einem der nachfolgend genannten Informationen abhängig:

- der Fahrsituation, in der sich das Fahrzeug befindet;
- dem Moment, das ein Fahrer am Lenkrad aufbringt;
- eines Reibungswerts der elektromechanischen Lenkung;
- einem geschätzten Schwingungsparameter der elektromechanischen Lenkung;
- dem Signal-Rausch-Verhältnis der Eingangsinformation, die der ersten Reglereinheit (2) zugeführt wird.

Dadurch lässt sich das Regelverhalten der Regelungseinrichtung abhängig von dem Fahrzustand bzw. der Fahrsituation anpassen.

Gemäß einem Ausführungsbeispiel ist die Reglerverstärkung im Wertebereich zwischen 0,2 und 3, insbesondere zwischen 0,6 und 1,5 durch die Steuergröße anpassbar. Dadurch lässt sich die gewünschte Einflussnahme auf das Regelverhalten vorteilhaft erreichen.

Gemäß einem weiteren Aspekt betrifft die Erfindung ein Verfahren zur Regelung des Lenkwinkels eines Fahrzeugs mittels einer ersten Reglereinheit, deren Regelungsverhalten zumindest einen integrierenden Anteil hat. Es ist ein der ersten Reglereinheit überlagerter Regler vorgesehen, der einen Rückführpfad und einen Vorfilter aufweist. Der Rückführpfad stellt basierend auf Ist-Lenkwinkelinformationen, die von der ersten Reglereinheit als Ausgangsgröße bereitgestellt werden, eine erste Anpassgröße bereit. Der Vorfilter stellt basierend auf Soll-Lenkwinkelinformationen eine zweite Anpassgröße bereit. Der überlagerte Regler stellt basierend auf der ersten und zweiten Anpassgröße eine Eingangsinformation für die erste Reglereinheit bereit. Der Rückführpfad weist ein erstes Korrekturglied auf, dessen Übertragungsverhalten basierend auf zumindest einer Steuergröße angepasst wird. Der Vorfilter weist ein zweites Korrekturglied auf, dessen Übertragungsverhalten basierend auf zumindest einer Steuergröße angepasst wird. Mittels des überlagerten Reglers wird zumindest die Reglerverstärkung der ersten Reglereinheit basierend auf der Steuergröße angepasst.

Gemäß einer Ausführungsform des Verfahrens ist die erste Reglereinheit eine in sich geschlossene Reglereinheit, die keine externe Schnittstelle aufweist, über die die Reglerverstärkung und/oder die Übertragungsfunktion der ersten Reglereinheit anpassbar ist. Die Reglerverstärkung und/oder die Übertragungsfunktion der ersten Reglereinheit wird durch eine Anpassung der Soll-Lenkwinkelinformationen und eine Anpassung von rückgeführten Ist-Lenkwinkelinformationen abhängig von der Steuergröße eingestellt. Dadurch ist eine indirekte Anpassung der Reglerverstärkung und/oder der Übertragungsfunktion der ersten Reglereinheit von außen möglich.

Unter "überlagerter Regler" wird zumindest ein Teil eines Regelkreises verstanden, der die Eingangsinformationen einer unterlagerten Reglereinheit, d. h. einer hierarchisch gesehen unteren Regelungsstruktur beeinflusst. Der überlagerte Regler kann insbesondere ein Signal oder eine Information der unterlagerten Reglereinheit verwenden, um dadurch das Regelverhalten der unterlagerten Reglereinheit zu beeinflussen.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:

Fig. 1     beispielhaft eine schematische Darstellung einer ersten Reglereinheit als Lenkwinkelregelung einer elektromechanischen Lenkung eines Fahrzeugs;

Fig. 2     beispielhaft eine schematische Darstellung einer gewünschten, modifizierten ersten Reglereinheit als Lenkwinkelregelung einer elektromechanischen Lenkung eines Fahrzeugs;

Fig. 3     beispielhaft und schematisch eine schematische Darstellung einer ersten Ausführungsform einer Regelungseinrichtung mit der in Fig. 1 gezeigten ersten Reglereinheit und einem überlagerten Regler, mittels dem die Regelverstärkung abhängig von einer Steuergröße anpassbar ist; und

Fig. 4     beispielhaft und schematisch eine schematische Darstellung einer zweiten Ausführungsform einer Regelungseinrichtung mit der in Fig. 1 gezeigten ersten Reglereinheit und einem überlagerten Regler, mittels dem die Regelverstärkung abhängig von einer Steuergröße anpassbar ist.

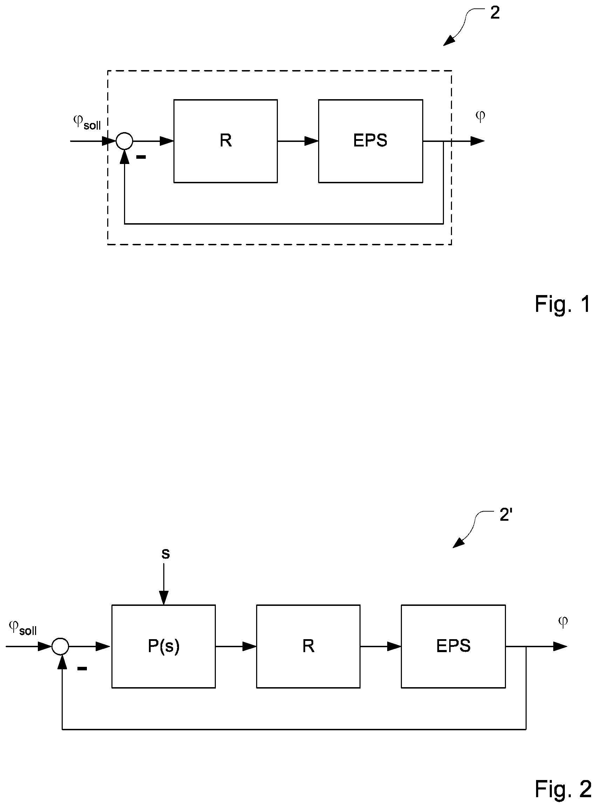

Figur 1 zeigt beispielhaft ein schematisches Blockdiagramm einer ersten Reglereinheit 2, die zur Regelung einer Lenkeinrichtung mit elektromechanischem Antrieb (EPS: electric power steering) verwendet wird. Bei einer derartigen Lenkeinrichtung unterstützt ein programmgesteuerter elektrischer Motor die Lenkbewegungen des Fahrers bzw. nimmt bei autonomem bzw. teilautonomem Fahren zumindest teilweise eigene Lenkbewegungen vor.

Im Blockschaltbild stellt der mit R bezeichnete Block den Lenkwinkelregler dar, der eine Stellgröße für die elektromechanische Lenkeinrichtung EPS bereitstellt. Die elektromechanische Lenkeinrichtung EPS umfasst dabei sowohl die Lenkmechanik als auch den Stellmotor.

Die erste Reglereinheit 2 erhält als Eingangsinformation beispielsweise den Solllenkwinkel $\varphi_{soll}$, der beispielsweise von einem elektronischen Steuergerät, insbesondere einer eine autonome oder teilautonome Fahrfunktion steuernden Rechnereinheit bereitgestellt wird. Für den Solllenkwinkel $\varphi_{soll}$ wird hier auch der Begriff "Soll-Lenkwinkelinformation" verwendet.

Auf den Subtraktionspunkt der ersten Reglereinheit 2, an dem aus dem Solllenkwinkel $\varphi_{soll}$ und dem Ist-Lenkwinkel $\varphi$, im Folgenden auch als Ist-Lenkwinkelinformation bezeichnet, eine Regeldifferenz gebildet wird, folgt beispielsweise ein Lenkwinkelregler R, der aus der Regeldifferenz als Stellgröße beispielsweise ein Sollstellmoment bereitstellt. Der Lenkwinkelregler R kann beispielsweise ein PID-Regler sein. Der Lenkwinkelregler R weist einen integrierenden Anteil auf. Dieser integrierende Anteil kann zu unerwünschtem Fahrverhalten führen, beispielsweise oszillierenden Lenkbewegungen. Diese oszillierenden Lenkbewegungen führen zu einem unruhigen Fahrverhalten und stellen für den Fahrer ein unnatürliches Fahrverhalten dar, was meist als störend empfunden wird.

Die erste Reglereinheit 2 ist beispielsweise eine in sich geschlossene oder gekapselte Reglereinheit, die keine Schnittstelle zur Zuführung von externen Steuersignalen ermöglicht, über die das Regelverhalten fahrzustandsabhängig, situationsabhängig und/oder abhängig von Fahrbefehlen des menschlichen Fahrers beeinflusst werden könnte. Somit besteht an der ersten Reglereinheit 2 direkt keine Möglichkeit zur Kompensation des sich u.a. durch den integrierenden Anteil ergebenden, störenden Regelverhaltens.

Fig. 2 zeigt eine Modifikation der in Fig. 1 gezeigten ersten Reglereinheit 2. Diese modifizierte erste Reglereinheit 2' stellt die Wunsch-Lenkwinkelregelung dar. Die Modifikation besteht darin, dass das Regelverhalten der modifizierten ersten Reglereinheit 2' durch eine Steuergröße s angepasst werden kann. Insbesondere kann die Reglerverstärkung P(s) basierend auf der Steuergröße s angepasst werden. Dadurch kann situationsabhängig die Reglerverstärkung P(s) derart angepasst werden, dass die Einflüsse des integrierenden Anteils reduziert werden. Dies kann beispielsweise dadurch erfolgen, dass die Reglerverstärkung P(s) in bestimmten Situationen durch das Steuersignal s reduziert wird. So kann beispielsweise bei Geradeausfahrt ein oszillierendes Lenkverhalten reduziert werden, was zu einem höheren Fahrkomfort führt. Auch bei einem kooperierenden Fahren, bei dem der Fahrer ein Lenkmoment auf das Lenkrad aufbringt, ist es vorteilhaft, die Reglerverstärkung P(s) durch das Steuersignal s zu reduzieren, um ein Regelverhalten, das gegen das Lenkmoment des Fahrers wirkt, zu reduzieren.

In anderen Fahrsituationen, insbesondere bei zeitkritischen Manövern wie beispielsweise Notausweichen, ist es möglich, die Reglerverstärkung P(s) zu erhöhen, um dynamischer auf die jeweilige Fahrsituation reagieren zu können. Es versteht sich, dass die Lenkwinkelregelung hierzu eine ausreichende Dynamik aufweisen sollte, um Instabilitäten im Regelverhalten zu vermeiden.

Jedoch ist es aufgrund der oben beschriebenen Ausbildung der ersten Reglereinheit 2 als eine in sich geschlossene oder gekapselte Reglereinheit nicht direkt möglich, die Reglerverstärkung P(s) basierend auf einem Steuersignal s zu verändern.

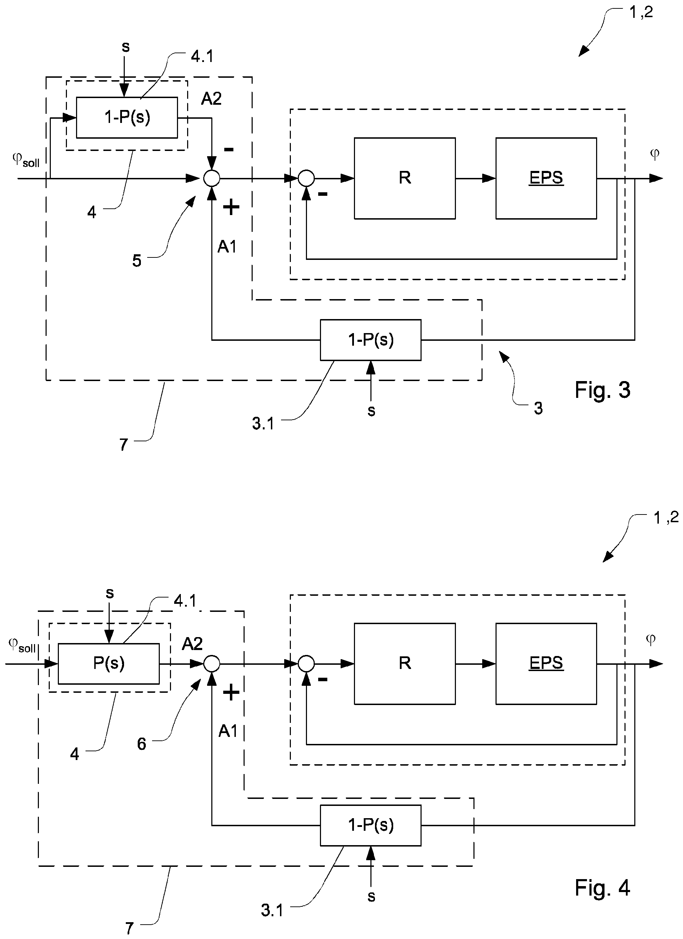

Fig. 3 zeigt ein erstes Ausführungsbeispiel einer Regelungseinrichtung 1, die dazu ausgebildet ist, bei einer in sich geschlossenen Reglereinheit 2 eine Anpassung der Reglerverstärkung P(s) zu ermöglichen.

Die Regelungseinrichtung 1 umfasst neben der ersten Reglereinheit 2 einen überlagerten Regler 7, mittels dem eine Anpassung der Reglerverstärkung P(s) abhängig von der Steuergröße s ermöglicht wird. Der überlagerte Regler 7 weist einen Rückführpfad 3 und einen Vorfilter 4 auf. Der Rückführpfad 3 verbindet die Ausgangsschnittstelle der ersten Reglereinheit 2, an der die Ist-Lenkwinkelinformation φ bereitgestellt wird, mit einem Summationspunkt 5, der ausgangsseitig mit der Eingangsschnittstelle der ersten Reglereinheit 2 gekoppelt ist.

Im Rückführpfad 3 ist ein erstes Korrekturglied 3.1 vorgesehen, dessen Übertragungsverhalten durch die Steuergröße s anpassbar ist. Die Übertragungsfunktion H des ersten Korrekturglieds 3.1 kann beispielsweise durch folgende Funktion charakterisiert sein:

$$H = 1 - P(s).$$

Dabei ist P(s) die Reglerverstärkung, die in der ersten Reglereinheit 2 erzielt werden soll und s gibt die Steuergröße an. Der Rückführpfad 3 stellt eine erste Anpassgröße A1 bereit, die dem Summationspunkt 5 zugeführt wird und dort zu der Soll-Lenkwinkelinformation $\varphi_{soll}$ hinzuaddiert wird.

Der Vorfilter 4 weist ein zweites Korrekturglied 4.1 auf, dessen Übertragungsverhalten ebenfalls durch die Steuergröße s anpassbar ist. Die Übertragungsfunktion H des zweiten Korrekturglieds 4.1 kann beispielsweise durch folgende Funktion charakterisiert sein:

$$H = 1 - P(s).$$

Dabei ist P(s) die Reglerverstärkung, die in der ersten Reglereinheit 2 erzielt werden soll und s gibt die Steuergröße an. Der Vorfilter 4 stellt eine zweite Anpassgröße A2 bereit, die ebenfalls dem Summationspunkt 5 zugeführt wird und dort von der Soll-Lenkwinkelinformation $\varphi_{soll}$ subtrahiert wird.

Im Ausführungsbeispiel gemäß Fig. 3 ist der Vorfilter 4 in einem Bypass des Eingangssignals der Regelungseinrichtung 1 vorgesehen, d.h. dem Summationspunkt 5 werden neben der Soll-Lenkwinkelinformation $\varphi_{soll}$ zusätzlich die erste Anpassgröße A1 und die zweite Anpassgröße A2 zugeführt, so dass basierend auf der Soll-Lenkwinkelinformation $\varphi_{soll}$ und den Anpassgrößen A1 und A2 der ersten Reglereinheit 2 an deren Eingangsschnittstelle modifizierte Eingangsinformationen zugeführt werden. Die Modifizierung der Eingangsinformationen durch den überlagerten Regler 7 hat zur Folge, dass die erste Reglereinheit 2 eine Reglerverstärkung P(s) aufweist, die basierend auf der Steuergröße s veränderbar ist. In anderen Worten weist damit die in Fig. 3 gezeigte Regelungseinrichtung ein Regelverhalten auf, das dem Regelverhalten der modifizierten ersten Reglereinheit 2' gemäß Fig. 2 entspricht.

Damit kann durch die Einflussnahme auf die der ersten Reglereinheit 2 zugeführten Eingangsinformationen, die durch eine Rückführung und Modifizierung der Ist-Lenkwinkelinformation φ und eine Modifizierung der Soll-Lenkwinkelinformation $\varphi_{soll}$ angepasst wurden, das gewünschte Regelverhalten mit einer situationsabhängig veränderbaren Reglerverstärkung erreicht werden.

Fig. 4 zeigt ein zweites Ausführungsbeispiel einer Regelungseinrichtung 1, die dazu ausgebildet ist, bei einer in sich geschlossenen Reglereinheit 2 eine Anpassung der Reglerverstärkung P(s) zu ermöglichen.

Die Regelungseinrichtung 1 umfasst neben der ersten Reglereinheit 2 wiederum einen überlagerten Regler 7, mittels dem eine Anpassung der Reglerverstärkung P(s) abhängig von der Steuergröße s ermöglicht wird. Der überlagerte Regler 7 weist einen Rückführpfad 3 und einen Vorfilter 4 auf. Der Rückführpfad 3 verbindet die Ausgangsschnittstelle der ersten Reglereinheit 2, an der die Ist-Lenkwinkelinformation φ bereitgestellt wird, mit einem Summationspunkt 6, der ausgangsseitig mit der Eingangsschnittstelle der ersten Reglereinheit 2 gekoppelt ist.

Im Rückführpfad 3 ist ein erstes Korrekturglied 3.1 vorgesehen, dessen Übertragungsverhalten durch die Steuergröße s anpassbar ist. Die Übertragungsfunktion H des ersten Korrekturglieds 3.1 kann beispielsweise durch folgende Funktion charakterisiert sein:

$$H = 1 - P(s).$$

Dabei ist P(s) die Reglerverstärkung, die in der ersten Reglereinheit 2 erzielt werden soll und s gibt die Steuergröße an. Der Rückführpfad 3 stellt eine erste Anpassgröße A1 bereit, die dem Summationspunkt 6 zugeführt wird und dort zu modifizierten Soll-Lenkwinkelinformation hinzuaddiert wird.

Der Vorfilter 4 weist ein zweites Korrekturglied 4.1 auf, dessen Übertragungsverhalten ebenfalls durch die Steuergröße s anpassbar ist. Die Übertragungsfunktion H des zweiten Korrekturglieds 4.1 kann beispielsweise durch folgende Funktion charakterisiert sein:

$$H = P(s).$$

Dabei ist P(s) die Reglerverstärkung, die in der ersten Reglereinheit 2 erzielt werden soll und s gibt die Steuergröße an. Der Vorfilter 4 stellt eine zweite Anpassgröße A2 bereit, die dem Summationspunkt 6 als modifizierte Soll-Lenkwinkelinformation zugeführt wird. In anderen Worten wird also am Summationspunkt 6 die erste und zweite Anpassgröße A1, A2 addiert und die sich daraus ergebende Summeninformation der ersten Reglereinheit 2 als Eingangsinformation bereitgestellt.

Die Modifizierung der Eingangsinformationen durch den überlagerten Regler 7 hat wiederum zur Folge, dass die erste Reglereinheit 2 eine Reglerverstärkung P(s) aufweist, die basierend auf der Steuergröße s veränderbar ist. In anderen Worten weist damit die in Fig. 4 gezeigte Regelungseinrichtung 1 ein Regelverhalten auf, das dem Regelverhalten der modifizierten ersten Reglereinheit 2' gemäß Fig. 2 entspricht.

Damit kann durch die Einflussnahme auf die der ersten Reglereinheit 2 zugeführten Eingangsinformationen, die durch eine Rückführung und Modifizierung der Ist-Lenkwinkelinformation φ und eine Modifizierung der Soll-Lenkwinkelinformation φ_soll angepasst wurden, das gewünschte Regelverhalten mit einer situationsabhängig veränderbaren Reglerverstärkung erreicht werden.

Als Steuergröße s können eine oder mehrere der nachfolgend genannten Informationen verwendet werden:

- Das vom menschlichen Fahrer auf das Lenkrad aufgebrachte Lenkmoment. Damit kann beispielsweise mit steigendem Lenkmoment des menschlichen Fahrers die Reglerverstärkung reduziert werden, um ein unerwünschtes Entgegenwirken des Stellmotors gegen das vom Fahrer initiierte Lenkmanöver zu verringern.

- Informationen über bestimmte Fahrsituationen, beispielsweise eine erkannte Baustelle. In diesem Fall ist es vorteilhaft, die Reglerverstärkung zu reduzieren, um das Entgegenwirken der Lenkwinkelregelung gegen die vom Fahrer initiierten Lenkmanöver zu verringern.

- Die geschätzte Reibung in der elektromechanischen Lenkung, die sich über die Lebensdauer verändert. Wenn nämlich die Reibung über der Zeit abnimmt, wird in der Konsequenz ein schwächer gedämpftes Lenksystem erhalten. In diesem Fall kann die ursprünglich gewählte Reglerverstärkung zu hoch sein bzw. eine zu geringe Phasenreserve aufweisen. Zudem kann sich bei Reibung eine Dauerschwingung des Lenkwinkels in Form eines Grenzzyklus einstellen, dessen charakteristische Kennwerte Schwingungsamplitude und Schwingungsfrequenz von der Höhe der Reibung und dem Frequenzgang der Störübertragungsfunktion der Lenkwinkelregelung abhängen. Ein geänderter Reibungsparameter bedarf daher der Anpassung des Frequenzganges der Lenkwinkelregelung, wenn die charakteristischen Kennwerte des Grenzzyklus gleich bleiben sollen.

- Geschätzte Schwingungsparameter wie beispielsweise Amplitude und Frequenz von durch die Lenkwinkelregelung der elektromechanischen Lenkung verursachte Oszillationen;
- dem Signal-Rausch-Verhältnis der Eingangsinformation, die der ersten Reglereinheit 2 zugeführt wird.

Die Reglerverstärkung P(s) kann in einem Wertebereich von $P_{min} < P(s) < P_{max}$ verändert werden. Hierbei können $P_{min}$ beispielsweise einen Wert von 0,2, insbesondere einen Wert von 0,6 und $P_{max}$ beispielsweise einen Wert von 3, insbesondere einen Wert von 1,5 haben.

Voranstehend wurde davon ausgegangen, dass der Faktor, der durch das erste und zweite Korrekturglied verändert wird, die Reglerverstärkung P(s) ist, d.h. eine rationale Zahl, über die der Verstärkungsfaktor der ersten Reglereinheit 2 modifiziert werden kann.

Abweichend hiervon kann der Faktor auch durch eine komplexe Filterfunktion gebildet werden, mit dessen Hilfe das Übertragungsverhalten ersten Reglereinheit 2, d.h. der Lenkwinkelregelung durch entsprechende Vorgabe von außen modifiziert wird.

Komplexe Filterfunktionen kommen vor allem dann in Betracht, wenn beispielsweise Resonanzüberhöhungen des EPS Lenkwinkelreglers, beispielsweise hervorgerufen durch eine zu geringe Phasenreserve, nachträglich oder gezielt reduziert werden sollen. Hierdurch lässt sich die Amplitude der Schwingung des Lenkrades und damit auch die Kennwerte der lateralen Oszillation des Fahrzeugs während der Spurführung günstig beeinflussen. Die einfachste der hierfür geeigneten Filterfunktionen ist ein Filter mit Hochpassverhalten, wie es beispielsweise ein PD-Glied darstellt. Mit Hilfe der Steuergröße s kann hier die Lage der Nullstelle des PD-Glieds und damit der Grad der Schwingungsdämpfung variiert werden. Zusätzlich kann weiterhin der Verstärkungsfaktor des PD-Glieds verändert werden, womit ebenfalls auf den Grad der Schwingungsdämpfung Einfluss genommen werden kann.

Wenn die Dynamik der ersten Reglereinheit 2 fahrsituationsbedingt unter Vorgabe der Steuergröße s erhöht werden soll, kann die Wahl eines höheren Verstärkungsfaktors P stabilitätsbedingt nur bis zu einer bestimmten oberen natürlichen Grenze erfolgen. Ist dennoch eine Kreisverstärkung oberhalb der natürlichen Grenze gefordert, so ist es vorteilhaft, wenn anstelle eines Verstärkungsfaktors in Form einer rationalen Zahl für P(s) eine komplexe Filterfunktion verwendet wird, deren Pole und Nullstellen unter Berücksichtigung regelungstechnischer Stabilitätskriterien (z.B. Nyquistkriterum) zu wählen sind. Dies bedingt in den meisten Fällen die Auslegung von Filter-Nullstellen derart, dass der Phasengang des offenen Winkelregelkreises im Bereich der Durchtrittsfrequenz angehoben wird. Im einfachsten Fall wird die Filterfunktion dann durch ein Übertragungsglied mit zwei Nullstellen und aufgrund der technischen Realsierbarkeit auch mit zwei Polen repräsentiert. Anwendungsfälle für die vorübergehende Umsetzung einer höheren Lenkwinkelreglerdynamik sind beispielsweise dynamische Notausweichmanöver, für deren Ausführung eine höhere Winkeldynamik erforderlich sein kann als durch die Auslegung der ersten Reglereinheit 2 vorgegeben.

Die Erfindung wurde voranstehend an Ausführungsbeispielen beschrieben. Es versteht sich, dass zahlreiche Änderungen sowie Abwandlungen möglich sind, ohne dass dadurch der durch die Patentansprüche definierte Schutzbereich verlassen wird.

Bezugszeichenliste

1 Regelungseinrichtung
2 erste Reglereinheit
2' modifizierte erste Reglereinheit
3 Rückführpfad
3.1 erstes Korrekturglied
4 Vorfilter
4.1 zweites Korrekturglied
5 Summationspunkt
6 Summationspunkt
7 überlagerter Regler

A1 erste Anpassgröße
A2 zweite Anpassgröße
EPS elektromechanische Lenkeinrichtung
P(s) Reglerverstärkung
R Lenkwinkelregler
s Steuergröße
$\varphi_{soll}$ Soll-Lenkwinkelinformationen
$\varphi$ Ist-Lenkwinkelinformationen

1) größe (s) eingestellt wird.

**Patentansprüche**

1. Regelungseinrichtung zur Lenkwinkelregelung für ein Fahrzeug umfassend eine erste Reglereinheit (2), wobei ein der ersten Reglereinheit (2) überlagerter Regler (7) vorgesehen ist, der einen Rückführpfad (3) und einen Vorfilter (4) aufweist, wobei der Rückführpfad (3) basierend auf Ist-Lenkwinkelinformationen ($\varphi$), die von der ersten Reglereinheit (2) als Ausgangsgröße bereitgestellt werden, eine erste Anpassgröße (A1) und der Vorfilter (4) basierend auf Soll-Lenkwinkelinformationen ($\varphi_{soll}$) eine zweite Anpassgröße (A2) bereitstellen, wobei der überlagerte Regler (7) dazu ausgebildet ist, basierend auf der ersten und zweiten Anpassgröße (A1, A2) eine Eingangsinformation für die erste Reglereinheit (2) zu bilden, **dadurch gekennzeichnet, dass** der Rückführpfad (3) ein erstes Korrekturglied (3.1) aufweist, dessen Übertragungsverhalten basierend auf zumindest einer Steuergröße (s) anpassbar ist, wobei der Vorfilter (4) ein zweites Korrekturglied (4.1) aufweist, dessen Übertragungsverhalten basierend auf der zumindest einen Steuergröße (s) anpassbar ist, und dass der überlagerte Regler (7) derart ausgebildet ist, dass zumindest eine Reglerverstärkung (P(s)) der ersten Reglereinheit (2) basierend auf der Steuergröße (s) anpassbar ist.

2. Regelungseinrichtung nach Anspruch 1, **dadurch gekennzeichnet, dass** die Reglerverstärkung (P(s)) eine rationale Zahl ist oder durch eine komplexe Filterfunktion gebildet wird.

3. Regelungseinrichtung nach Anspruch 1 oder 2, **dadurch gekennzeichnet, dass** das erste Korrekturglied (3.1) dazu ausgebildet ist, die Ist-Lenkwinkelinformationen ($\varphi$) mit einem von der Steuergröße (s) abhängigen Faktor oder einer komplexen Filterfunktion zu multiplizieren.

4. Regelungseinrichtung nach Anspruch 3, **dadurch gekennzeichnet, dass** der Faktor (1-P(s)) ist, wobei P(s) ein vom Steuersignal (s) abhängiger Korrekturfaktor ist, dessen Wert die Anpassung der Reglerverstärkung (P(s)) der ersten Reglereinheit (2) angibt oder wobei P(s) eine vom Steuersignal abhängige komplexe Filterfunktion ist.

5. Regelungseinrichtung nach einem der vorhergehenden Ansprüche, **dadurch gekennzeichnet, dass** das zweite Korrekturglied (4.1) dazu ausgebildet ist, die Soll-Lenkwinkelinformationen ($\varphi_{soll}$) mit einem von der Steuergröße (s) abhängigen Faktor oder einer komplexen Filterfunktion zu multiplizieren.

6. Regelungseinrichtung nach Anspruch 5, **dadurch gekennzeichnet, dass** der Faktor (1-P(s)) ist, wobei P(s) ein vom Steuersignal (s) abhängiger Korrekturfaktor ist, dessen Wert die Anpassung der Reglerverstärkung (P(s)) der ersten Reglereinheit (2) angibt oder wobei P(s) eine vom Steuersignal abhängige komplexe Filterfunktion ist.

7. Regelungseinrichtung nach Anspruch 5, **dadurch gekennzeichnet, dass** der Faktor P(s) ist, wobei P(s) ein vom Steuersignal (s) abhängiger Korrekturfaktor ist, dessen Wert die Anpassung der Reglerverstärkung (P(s)) der ersten Reglereinheit (2) angibt oder wobei P(s) eine vom Steuersignal abhängige komplexe Filterfunktion ist.

8. Regelungseinrichtung nach einem der Ansprüche 1 bis 6, **dadurch gekennzeichnet, dass** ein Summationspunkt (5) vorgesehen ist, an dem zu den Soll-Lenkwinkelinformationen ($\varphi_{soll}$) die erste Anpassgröße (A1) hinzuaddiert und an dem von den Soll-Lenkwinkelinformationen ($\varphi_{soll}$) die zweite Anpassgröße (A2) subtrahiert werden, wobei die Ausgangsinformationen des Summationspunkts (5) die Eingangsgröße der ersten Reglereinheit (2) bildet.

9. Regelungseinrichtung nach einem der Ansprüche 1 bis 5 oder 7, **dadurch gekennzeichnet, dass** ein Summationspunkt (6) vorgesehen ist, an dem die erste Anpassgröße (A1) und die zweite Anpassgröße (A2) addiert werden, wobei die Ausgangsinformationen des Summationspunkts (6) die Eingangsgröße der ersten Reglereinheit (2) bildet.

10. Regelungseinrichtung nach einem der vorhergehenden Ansprüche, **dadurch gekennzeichnet, dass** die erste Reglereinheit (2) eine in sich geschlossene Reglereinheit ist, die keine externe Schnittstelle aufweist, über die die Reglerverstärkung (P(s)) der ersten Reglereinheit (2) anpassbar ist.

11. Regelungseinrichtung nach einem der vorhergehenden Ansprüche, **dadurch gekennzeichnet, dass** die Steuergröße (s) zumindest von einem der nachfolgend genannten Informationen abhängig ist:

   - der Fahrsituation, in der sich das Fahrzeug befindet;
   - dem Moment, das ein Fahrer am Lenkrad aufbringt;
   - eines Reibungswerts der elektromechanischen Lenkung;
   - einem geschätzten Schwingungsparameter der elektromechanischen Lenkung;
   - dem Signal-Rausch-Verhältnis der Eingangsinformation, die der ersten Reglereinheit (2) zugeführt wird.

12. Regelungseinrichtung nach einem der vorhergehenden Ansprüche, **dadurch gekennzeichnet, dass** die Reglerverstärkung (P(s)) im Wertebereich zwischen 0,2 und 3 durch die Steuergröße (s) anpassbar ist.

13. Verfahren zur Lenkwinkelregelung für ein Fahrzeug umfassend eine erste Reglereinheit (2), vorsehen eines der ersten Reglereinheit (2) überlagerten Reglers (7), der einen Rückführpfad (3) und einen Vorfilter (4) aufweist, bereitstellen einer ersten Anpassgröße (A1) durch den Rückführpfad (3) basierend auf Ist-Lenkwinkelinformationen ($\varphi$), die von der ersten Reglereinheit (2) als Ausgangsgröße bereitgestellt werden und bereitstellen einer zweiten Anpassgröße (A2) durch den Vorfilter (4) basierend auf Soll-Lenkwinkelinformationen ($\varphi_{soll}$), wobei der überlagerte Regler (7) basierend auf der ersten und zweiten Anpassgröße (A1, A2) eine Eingangsinformation für die erste Reglereinheit (2) bereitstellt, **dadurch gekennzeichnet, dass** der Rückführpfad (3) ein erstes Korrekturglied (3.1) aufweist, dessen Übertragungsverhalten basierend auf zumindest einer Steuergröße (s) angepasst wird, wobei der Vorfilter (4) ein zweites Korrekturglied (4.1) aufweist, dessen Übertragungsverhalten basierend auf der zumindest einen Steuergröße (s) angepasst wird, und dass mittels des überlagerten Reglers (7) zumindest eine Reglerverstärkung (P(s)) der ersten Reglereinheit (2) basierend auf der Steuergröße (s) angepasst wird.

14. Verfahren nach Anspruch 13, **dadurch gekennzeichnet, dass** die erste Reglereinheit (2) eine in sich geschlossene Reglereinheit ist, die keine externe Schnittstelle aufweist, über die die Reglerverstärkung (P(s)) und/oder die Übertragungsfunktion der ersten Reglereinheit (2) anpassbar ist und dass die Reglerverstärkung (P(s)) und/oder die Übertragungsfunktion der ersten Reglereinheit (2) durch eine Anpassung der Soll-Lenkwinkelinformationen ($\varphi_{Soll}$) und eine Anpassung von rückgeführten Ist-Lenkwinkelinformationen ($\varphi$) abhängig von der Steuergröße (s) eingestellt wird.

**Claims**

1. Control device for controlling the steering angle of a vehicle, comprising a first controller unit (2), wherein a controller (7) which is superimposed on the first controller unit (2) is provided, which has a feedback path (3) and a pre-filter (4), wherein the feedback path (3) provides a first adaptation variable (A1) based on current steering angle information ($\varphi$), which is provided by the first controller unit (2) as an output variable, and the pre-filter (4) provides a second adaptation variable (A2) based on target steering angle information ($\varphi_{Soll}$), wherein the superimposed controller (7) is designed to form input information for the first controller unit (2) based on the first and second adaptation variable (A1, A2), **characterized in that** the feedback path (3) has a first correction term (3.1). of which the transfer response can be adapted on the basis of at least one control variable (s), wherein the pre-filter (4) has a second correction term (4.1), of which the transfer response can be adapted on the basis of the at least one control variable (s), and **in that** the superimposed controller (7) is designed in such a way that at least one controller gain (P(s)) of the first controller unit (2) can be adapted on the basis of the control variable (s).

2. Control device according to Claim 1, **characterized in that** the controller gain (P(s)) is a rational number or is formed by a complex filter function.

3. Control device according to Claim 1 or 2, **characterized in that** the first correction term (3.1) is designed to multiply the current steering angle information ($\varphi$) by a factor that depends on the control variable (s) or by a complex filter function.

4. Control device according to Claim 3, **characterized in that** the factor is (1-P(s)), where P(s) is a correction factor that depends on the control signal (s) and the value of which indicates the adaptation of the controller gain (P(s)) of the first controller unit (2), or where P(s) is a complex filter function that depends on the control signal.

5. Control device according to one of the preceding claims, **characterized in that** the second correction term (4.1) is designed to multiply the target steering angle information ($\varphi_{Soll}$) by a factor that depends on the control variable (s) or by a complex filter function.

6. Control device according to Claim 5, **characterized in that** the factor is (1-P(s)), where P(s) is a correction factor that depends on the control signal (s) and the value of which indicates the adaptation of the controller gain (P(s)) of the first controller unit (2), or where P(s) is a complex filter function that depends on the control signal.

7. Control device according to Claim 5, **characterized in that** the factor is P(s), where P(s) is a correction factor that depends on the control signal (s) and the value of which indicates the adaptation of the controller gain (P(s)) of the first controller unit (2), or where P(s) is a complex filter function that depends on the control signal.

8. Control device according to one of Claims 1 to 6, **characterized in that** a first summation point (5) is provided, at which the first adaptation variable (A1) is added to the target steering angle information ($\varphi_{Soll}$) and at which the second adaptation variable (A2) is subtracted from the target steering angle information ($\varphi_{Soll}$), wherein the output information from the summation point (5) forms the input variable of the first controller unit (2).

9. Control device according to one of Claims 1 to 5 or 7, **characterized in that** a summation point (6) is provided, at which the first adaptation variable (A1) and the second adaptation variable (A2) are added, wherein the output information from the summation point (6) forms the input variable of the first controller unit (2).

10. Control device according to one of the preceding claims, **characterized in that** the first controller unit (2) is a self-contained controller unit which has no external interface via which the controller gain (P(s)) of the first controller unit (2) can be adapted.

11. Control device according to one of the preceding claims, **characterized in that** the control variable (s) depends on at least one of the items of information named below:

    - the driving situation in which the vehicle finds itself;
    - the torque which a driver applies to the steering wheel;
    - a coefficient of friction of the electromechanical steering system;
    - an estimated vibration parameter of the electromechanical steering system;
    - the signal-to-noise ratio of the input information which is supplied to the first controller unit (2).

12. Control device according to one of the preceding claims, **characterized in that** the controller gain (P(s)) can be adapted in the value range between 0.2 and 3 by the control variable (s).

13. Method for controlling the steering angle of a vehicle comprising a first controller unit (2), providing a controller (7) superimposed on the first controller unit (2), which has a feedback path (3) and a pre-filter (4), providing a first adaptation variable (A1) by means of the feedback path (3) based on current steering angle information ($\varphi$), which is provided by the first controller unit (2) as an output variable, and providing a second adaptation variable (A2) by means of the pre-filter (4) based on target steering angle information ($\varphi_{soll}$), wherein the superimposed controller (7) provides input information for the first controller unit (2) based on the first and second adaptation variable (A1, A2), **characterized in that** the feedback path (3) has a first correction term (3.1), the transfer response of which is adapted on the basis of at least one control variable (s), wherein the pre-filter (4) has a second correction term (4.1), the transfer response of which is adapted on the basis of the at least one control variable (s), and **in that** by means of the superimposed controller (7), at least one controller gain (P(s)) of the first controller unit (2) is adapted on the basis of the control variable (s).

14. Method according to Claim 13, **characterized in that** the first controller unit (2) is a self-contained controller unit which has no external interface via which the controller gain (P(s)) and/or the transfer function of the first controller unit (2) can be adapted, and **in that** the controller gain (P(s)) and/or the transfer function of the first controller unit (2) is adjusted by adapting the target steering angle information ($\varphi_{soll}$) and adapting fed-back current steering angle information ($\varphi$) as a function of the control variable (s).

**Revendications**

1. Dispositif de régulation pour la régulation de l'angle de braquage d'un véhicule, comprenant une première unité de régulation (2), dans lequel est prévu un régulateur (7), supérieur par rapport à la première unité de régulation (2), qui présente un chemin de rétroaction (3) et un préfiltre (4), dans lequel le chemin de rétroaction (3) fournit une première grandeur d'adaptation (A1) sur la base d'informations d'angle de braquage réel ($\varphi$) qui sont fournies par la première unité de régulation (2) sous forme de grandeur de sortie, et le préfiltre (4) fournit une deuxième grandeur d'adaptation (A2) sur la base des informations d'angle de braquage de consigne ($\varphi_{soll}$), dans lequel le régulateur supérieur (7) est réalisé pour former une information d'entrée pour la première unité de régulation (2) sur la base de la première et de la deuxième grandeur d'adaptation (A1, A2),

**caractérisé en ce que** le chemin de rétroaction (3) présente un premier élément de correction (3.1) dont le comportement au transfert peut être adapté sur la base d'au moins une grandeur de commande (s), dans lequel le préfiltre (4) présente un deuxième élément de correction (4.1) dont le comportement au transfert peut être adapté sur la base de ladite au moins une grandeur de commande (s), et **en ce que** le régulateur supérieur (7) est réalisé de telle sorte qu'au moins un gain de régulation (P(s)) de la première unité de régulation (2) peut être adapté sur la base de la grandeur de commande (s).

2. Dispositif de régulation selon la revendication 1, **caractérisé en ce que** le gain de régulation (P(s)) est un nombre rationnel ou est formé par une fonction de filtrage complexe.

3. Dispositif de régulation selon la revendication 1 ou 2, **caractérisé en ce que** le premier élément de correction (3.1) est réalisé pour multiplier les informations d'angle de braquage réel ($\varphi$) par un facteur ou une fonction de filtrage complexe dépendant de la grandeur de commande (s).

4. Dispositif de régulation selon la revendication 3, **caractérisé en ce que** le facteur est (1-P(s)), où P(s) est un facteur de correction dépendant du signal de commande (s) dont la valeur indique l'adaptation du gain de régulation (P(s)) de la première unité de régulation (2), et où P(s) est une fonction de filtrage complexe dépendant du signal de commande.

5. Dispositif de régulation selon l'une quelconque des revendications précédentes, **caractérisé en ce que** le deuxième élément de correction (4.1) est réalisé pour multiplier les informations d'angle de braquage de consigne ($\varphi_{soll}$) par un facteur ou une fonction de filtrage complexe dépendant de la grandeur de commande (s).

6. Dispositif de régulation selon la revendication 5, **caractérisé en ce que** le facteur est (1-P(s)), où P(s) est un facteur de correction dépendant du signal de commande (s) dont la valeur indique l'adaptation du gain de régulation (P(s)) de la première unité de régulation (2), et où P(s) est une fonction de filtrage complexe dépendant du signal de commande.

7. Dispositif de régulation selon la revendication 5, **caractérisé en ce que** le facteur est P(s), où P(s) est un facteur de correction dépendant du signal de commande (s) dont la valeur indique l'adaptation du gain de régulation (P(s)) de la première unité de régulation (2), ou bien où P(s) est une fonction de filtrage complexe dépendant du signal de commande.

8. Dispositif de régulation selon l'une quelconque des revendications 1 à 6, **caractérisé en ce qu'**un point de sommation (5) est prévu au niveau duquel la première grandeur d'adaptation (A1) est additionnée aux informations d'angle de braquage de consigne ($\varphi_{Soll}$), et au niveau duquel la deuxième grandeur d'adaptation (A2) est soustraite des informations d'angle de braquage de consigne ($\varphi_{soll}$), dans lequel les informations de sortie du point de sommation (5) constituent la grandeur d'entrée de la première unité de régulation (2).

9.  Dispositif de régulation selon l'une quelconque des revendications 1 à 5 ou 7, **caractérisé en ce qu'**un point de sommation (6) est prévu au niveau duquel la première grandeur d'adaptation (A1) et la deuxième grandeur d'adaptation (A2) sont additionnées, dans lequel les informations de sortie du point de sommation (6) constituent la grandeur d'entrée de la première unité de régulation (2).

10. Dispositif de régulation selon l'une quelconque des revendications précédentes, **caractérisé en ce que** la première unité de régulation (2) est une unité de régulation fermée qui ne présente aucune interface externe par laquelle le gain de régulation (P(s)) de la première unité de régulation (2) peut être adapté.

11. Dispositif de régulation selon l'une quelconque des revendications précédentes, **caractérisé en ce que** la grandeur de commande (s) dépend au moins d'une des informations ci-après :

    - de la situation de conduite dans laquelle se trouve le véhicule ;
    - du couple qu'un conducteur exerce au niveau du volant ;
    - d'un coefficient de frottement de la direction électromécanique ;
    - d'un paramètre d'oscillation estimé de la direction électromécanique ;
    - du rapport signal/bruit de l'information d'entrée qui est amenée à la première unité de régulation (2)

12. Dispositif de régulation selon l'une quelconque des revendications précédentes, **caractérisé en ce que** le gain de régulation (P(s)) est adaptable à l'aide de la grandeur de commande (s) dans la plage de valeurs comprise entre 0,2 et 3.

13. Procédé de régulation de l'angle de braquage d'un véhicule, comprenant une première unité de régulation (2), prévoir un régulateur (7) supérieur par rapport à la première unité de régulation (2) et qui présente un chemin de rétroaction (3) et un préfiltre (4), fournir une première grandeur d'adaptation (A1) par l'intermédiaire du chemin de rétroaction (3) sur la base d'informations d'angle de braquage réel ($\varphi$) qui

sont fournies par la première unité de régulation (2) sous forme de grandeur de sortie, et fournir une deuxième grandeur d'adaptation (A2) par l'intermédiaire du préfiltre (4) sur la base d'informations d'angle de braquage de consigne ($\varphi_{Soll}$), dans lequel le régulateur supérieur (7) fournit une information d'entrée pour la première unité de régulation (2) sur la base de la première et de la deuxième grandeur d'adaptation (A1, A2),
**caractérisé en ce que** le chemin de rétroaction (3) présente un premier élément de correction (3.1) dont le comportement au transfert est adapté sur la base d'au moins une grandeur de commande (s), dans lequel le préfiltre (4) présente un deuxième élément de correction (4.1) dont le comportement au transfert est adapté sur la base de ladite au moins une grandeur de commande (s), et **en ce qu'**au moyen du régulateur supérieur (7), au moins un gain de régulation (P(s)) de la première unité de régulation (2) est adapté sur la base de la grandeur de commande (s).

14. Procédé selon la revendication 13, **caractérisé en ce que** la première unité de régulation (2) est une unité de régulation fermée qui ne présente aucune interface externe par laquelle le gain de régulation (P(s)) et/ou la fonction de transfert de la première unité de régulation (2) peuvent être adaptés, et **en ce que** le gain de régulation (P(s)) et/ou la fonction de transfert de la première unité de régulation (2) sont réglés en fonction de la grandeur de commande (s) par une adaptation des informations d'angle de braquage de consigne ($\varphi_{soll}$) et une adaptation d'informations d'angle de braquage réel ($\varphi$) de rétroaction.

Fig. 1

Fig. 2

Fig. 3

Fig. 4

**IN DER BESCHREIBUNG AUFGEFÜHRTE DOKUMENTE**

**In der Beschreibung aufgeführte Patentdokumente**

- US 2019233003 A1